**Europäisches Patentamt**

**European Patent Office**

**Office européen des brevets**

(19)

(11) Veröffentlichungsnummer: **0 233 617 B1**

# (12) EUROPÄISCHE PATENTSCHRIFT

(45) Veröffentlichungstag der Patentschrift:
02.01.91 Patentblatt 91/01

(51) Int. Cl.$^5$: **H04B 10/12**

(21) Anmeldenummer: 87102107.7

(22) Anmeldetag: 14.02.87

(54) **Optischer Sende /Empfangsmodul.**

(30) Priorität: 19.02.86 DE 3605248

(43) Veröffentlichungstag der Anmeldung:
26.08.87 Patentblatt 87/35

(45) Bekanntmachung des Hinweises auf die
Patenterteilung:
02.01.91 Patentblatt 91/01

(84) Benannte Vertragsstaaten:
AT BE CH DE ES FR GB IT LI NL SE

(56) Entgegenhaltungen:
US-A- 4 199 226
US-A- 4 289 373
US-A- 4 292 512
ELECTRONIC ENGINEERING, Band 57, Nr.
700, April 1985, Seiten 53-56, London, GB; O.
KRUMPHOLZ et ai.: "Optical multiplexing of
fibre optic systems"

(56) Entgegenhaltungen:
APPLIED OPTICS, Band 20, Nr. 9, 1 Mai 1981,
Seiten 1640-1644, New York, US; M.D. DRAKE:
"Low reflectance terminations and
connections for dupex fiber-optic
telecommunication links"
PATENT ABSTRACTS OF JAPAN, Band 6, Nr.
38 (P-105)[916], 9. März 1982;& JP-A-56 156 810

(73) Patentinhaber: Standard Elektrik Lorenz
Aktiengesellschaft
Lorenzstrasse 10
D-7000 Stuttgart 40 (DE)

(72) Erfinder: Fussgänger, Kurt, Dr.
Königsberger Strasse 1
D-7148 Remseck 2 (DE)

(74) Vertreter: Graf, Georg Hugo, Dipl.-Ing. et al
Standard Elektrik Lorenz AG Patent- und
Lizenzwesen Postfach 30 09 29
D-7000 Stuttgart 30 (DE)

**Beschreibung**

Die Erfindung bezieht sich auf einen optischen Sende/Empfangsmodul gemäß dem Oberbegriff des Hauptanspruchs. Ein derartiger Modul ist in der älteren EP-A-0187 198 beschrieben. Er ist für den Einsatz in Nachrichtenübertragungssystemen nicht geeignet, da der verwendete Wellenleiterkoppler nur eine zu geringe Nachbarkanalunterdrückung ermöglicht.

Durch B. Hillerich et al "Duplexer with Hybrid Integrated Light Emitter and Detector" Conf. Proc. 10. ECOC, Stuttgart 1984, S 166-167 ist ein Modul bekannt, der einen Lichtsender, einen Lichtempfänger, zwei Kugellinsen und ein wellenlängenselektives Kantenfilter zur Trennung des Sende- und Empfangslichts, einen Empfängerlichtwellenleiter mit einem weiteren wellenlängenselektiven Filter und einen bidirektional betriebenen Übertragungslichtwellenleiter enthält. Aufgrund der zahlreichen, optischen Bauelemente besitzt ein derartiger Modul hohe Reflexionsverluste. Außerdem müssen die einzelnen Bauelemente justiert werden, und erlauben wegen der dabei begrenzten, erreichbaren Genauigkeit lediglich die Verwendung von Gradientenindexfasern für die Lichtwellenleiter.

Der Erfindung liegt die Aufgabe zugrunde, einen einfach aufgebauten optischen Sende/Empfangsmodul für bidirektionale Nachrichtenübertragung über einen Lichtwellenleiter mit beliebigen Übertragungseigenschaften zu schaffen.

Die Lösung dieser Aufgabe erfolgt mit den im Hauptanspruch genannten Mitteln. Vorteilhafte Weiterbildungen sind in den Unteransprüchen enthalten. Ein aus mehreren Kopplern bestehendes wellenlängenselektives Filter (vgl. Anspruch 2) ist aus "Electronics Letters 14th March 1985 Vol. 21, No. 6, S. 248f bekannt.

Der erfindungsgemäße optische Sende/Empfangsmodul weist sehr geringe optische Verluste auf. Vom Sender abgestrahltes und an Spleißstellen oder an einem Stecker zurückreflektiertes Licht kann nicht auf den Sender oder Empfänger gelangen, sondern stattdessen beispielsweise zur Überwachung der Senderfunktion herangezogen werden. Ferner können die Wellenleiterkoppler in einem Stück hergestellt werden, wodurch die Möglichkeit einer besonders preisgünstigen automatischen Massenfertigung gegeben ist. Darüberhinaus besitzen derartige Koppler eine hohe Wellenlängenselektivität, die Wellenlängenabstände von beispielsweise 10 nm - 300 nm erlauben. Außerdem können an diese Koppler auch Monomodelichtwellenleiter leicht angeschlossen werden.

Derartige Module sind insbesondere als Teilnehmeranschlußmodule für bidirektionale optische Nachrichtenübertragungssysteme mit Zeit- und/oder Wellenlängenmultiplex vorgesehen.

Die Erfindung wird nachstehend anhand von Ausführungsbeispielen erläutert. Es zeigt:

Fig. 1 einen ersten, einfachen Sende/Empfangsmodul

Fig. 2 einen zweiten Sende/Empfangsmodul mit höherer optischer Nachbarkanalunterdrückung als der erste

Fig. 3 einen dritten Sende/Empfangsmodul.

Weitere Ausführungen sind in der Beschreibung enthalten.

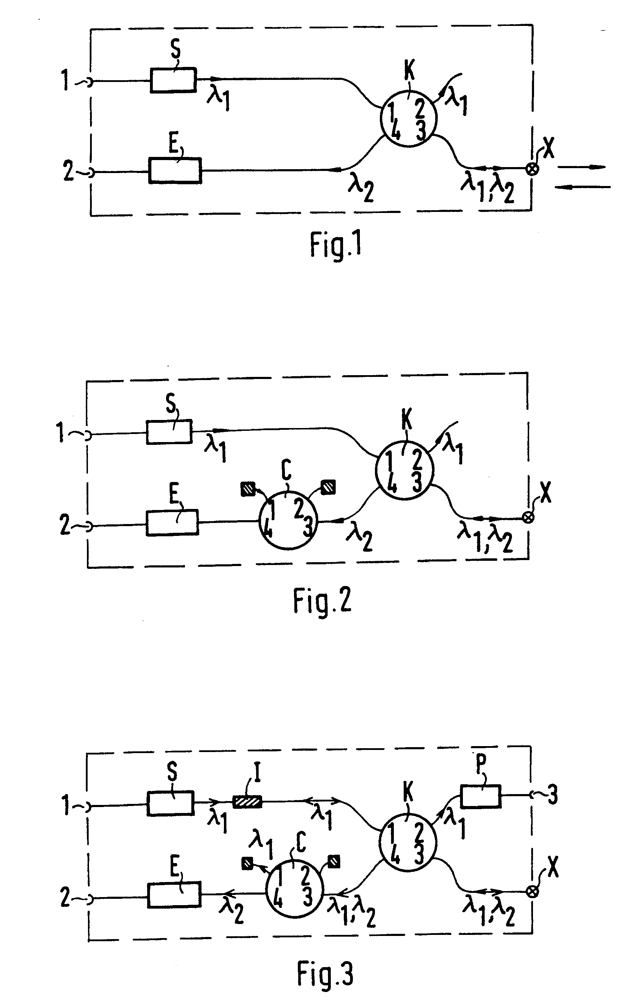

Der in Fig. 1 dargestellte optische Sende/Empfangsmodul enthält einen Sender S, einen Empfänger E und einen Koppler K. Der Koppler K ist ein wellenlängenselektiver Lichtwellenleiter-Verschmelzkoppler mit vier Anschlüssen. Der optische Sender S ist mit dem ersten Anschluß des Kopplers K verbunden. Der zweite Anschluß des Kopplers K wird nicht verwendet. Er kann mit einem optischen Wellensumpf reflexionsfrei abgeschlossen sein. Der dritte Anschluß des Kopplers K ist mit einem Stecker X verbunden, der zum Anschluß des Sende/Empfangsmoduls an einen Lichtwellenleiter eines Nachrichtenübertragungsnetzes dient. Der vierte Anschluß des Kopplers K ist mit dem optischen Empfänger E verbunden.

Der optische Sender S besteht aus einem elektrisch-optischen Wandler, beispielsweise einem Laser, einer Laserdiode oder einer lichtemittierenden Diode, der ein über einen Anschluß 1 ankommendes, erstes elektrisches Signal in einen modulierten Lichtstrahl der Wellenlänge $\lambda_1$ wandelt. Der optische Empfänger ist ein optisch-elektrischer Wandler, beispielsweise eine Photodiode, die einen vom Nachrichtenübertragungsnetz über den Stecker X ankommenden Lichtstrahl der Wellenlänge $\lambda_2$ in ein zweites elektrisches Signal wandelt, das an einem Anschluß 2 abgreifbar ist.

Der Koppler K ist so ausgelegt, daß vom optischen Sender S ausgesendetes Licht der Wellenlänge $\lambda_1$ im wesentlichen zum Stecker X und zu einem kleinen Teil an den zweiten Anschluß des Kopplers K gelangt und von dem Nachrichtenübertragungsnetz ankommendes Licht der Wellenlänge $\lambda_2$ praktisch nur zum Empfänger E gelangt.

Der in Fig. 2 dargestellte optische Sende/Empfangsmodul weist zur Erhöhung der optischen Nachbarkanalunterdrückung einen weiteren Wellenleiterkoppler C auf, der ebenfalls ein wellenlängenselektiver Lichtwellenleiter-Verschmelzkoppler ist. Der vierte Anschluß des Kopplers K ist mit dem dritten Anschluß des Kopplers C verbunden und der vierte Anschluß des Kopplers C ist mit dem optischen Empfänger E verbunden. Der erste und zweite Anschluß des Kopplers C ist reflexionsfrei abgeschlossen. Die beiden Koppler C, K bestehen aus drei miteinander verschmolzenen Monomode-Lichtwellenleiterstücken, von denen das erste vom optischen Sender S zum zweiten Anschluß des Kopplers K verläuft, das zweite vom optischen Empfänger E zum Stecker X und das dritte den ersten und zweiten Anschluß des Kopplers C verbindet.

Zur Erhöhung der Filterwirkung kann der Koppler C aus mehreren hintereinander geschalteten Kopplern bestehen, wobei jeweils der vierte Anschluß des einen Kopplers mit dem dritten Anschluß des anderen Kopplers verbunden ist, und die freien Anschlüsse reflexionsfrei abgeschlossen sind. Eine derartige Koppleranordnung wirkt wie ein Bandpaßfilter, und ist daher für bidirektionale Wellenlängenmultiplexsysteme besonders vorteilhaft.

Von dem Nachrichtenübertragungsnetz ankommendes Licht gelangt über den Koppler K zum Koppler C und wird in den optischen Wellensümpfen absorbiert, sofern es nicht die Wellenlänge $\lambda_2$ besitzt.

Der in Fig. 3 dargestellte optische Sende/Empfangsmodul enthält zusätzlich zu dem in Fig. 2 dargestellten einen optischen Isolator I und eine Photodiode P. Der optische Sender S ist über den optischen Isolator I mit dem ersten Anschluß des Kopplers K verbunden. Am zweiten Anschluß des Kopplers K ist die Photodiode P angeschlossen, die ein vom Betriebszustand des Senders S abhängiges elektrisches Signal abgibt. Dieses Signal tritt an einem Anschluß 3 auf. Mit diesem Signal ist in an sich bekannter Weise eine Überwachung und Steuerung des optischen Senders S möglich.

Bei einer anderen Ausführung des optischen Sende/Empfangsmoduls ist die Photodiode P an einem der freien Anschlüsse des Kopplers C angeschlossen.

Der optische Isolator I besteht aus einer Monomodefaser, deren Kern mit seltenen Erden (Yttrium, Gadolinium, Thulium, Holmium) und/oder Eisen dotiert ist. Er kann auch aus einem ferromagnetischen Kristall, insbesondere einem Seltene Erden-Eisen-Granat-Kristall $(Y_3Fe_5O_{12},$ $Y_{1.5}Gd_{1.5}Fe_5O_{12},$ $Tm_3Fe_5O_{12},$ $Gd_3Fe_5O_{12},$ $Ho_3Fe_5O_{12})$ bestehen. Der optische Isolator I ist in seiner Länge so dimensioniert, daß bei vorgegebener Magnetfeldstärke H und Verdet-Konstante V eine Drehung der Lichtpolarisationsebene zwischen dem Ausgang des optischen Senders E und dem Stecker X um einen Winkel W von $W = V L H = 45°$ auftritt (Faraday-Effekt). Bei Verwendung eines besonders reflexionsarmen Steckers kann auf den optischen Isolator I verzichtet werden.

Das vom optischen Sender S ausgesendete Licht der Wellenlänge $\lambda_1$ gelangt über den optischen Isolator I und den Koppler K zum größten Teil zum Stecker X und zu einem kleinen Teil zur Photodiode P. Im Stecker wird erfahrungsgemäß ein kleiner Teil des dort ankommenden Lichts reflektiert und gelangt einerseits über den Koppler K und den optischen Isolator I mit einer Phasenverschiebung von $\pm 90°$ zurück zum optischen Sender S und andererseits zum Koppler C, der nur Licht der Wellenlänge $\lambda_2$ zum optischen Empfänger E gelangen läßt. Licht der

Wellenlänge $\lambda_1$ wird in den an dem ersten und zweiten Anschluß des Kopplers C befindlichen optischen Wellensümpfen absorbiert.

Bei einer weiteren Ausführung der Erfindung ist der optische Sende/Empfangsmodul statt mit dem Stecker X durch eine Spleißverbindung mit dem Nachrichtenübertragungsnetz verbindbar. Wegen der dann zu vernachlässigenden Rückreflexion des gesendeten Lichts kann auf den optischen Isolator I verzichtet werden.

Bei weiteren Ausführungen des optischen Sende/Empfangsmoduls können statt Lichtwellenleiterfasern und daraus hergestellten Kopplern integriert optische Bauelemente, beispielsweise durch Dotierung eines Lithiumniobatsubstrates hergestellte Wellenleiterstrukturen verwendet sein. Als besonders vorteilhaft anzusehen ist ein optischer Sende/Empfangsmodul, bei dem der optische Sender S, der optische Empfänger E, die Koppler C, K und gegebenenfalls der optische Isolator I und die Photodiode P auf einem gemeinsamen Substrat integriert sind.

## Ansprüche

1. Optischer Sende/Empfangsmodul mit einem optischen Sender (S) zur Aussendung eines Lichtstrahls einer ersten Wellenlänge $\lambda_1$, einem optischen Empfänger (E) zum Empfangen eines Lichtstrahls einer zweiten Wellenlänge $\lambda_2$, und einem wellenlängenselektiven Wellenleiterkoppler (K), wobei der Sender (S) und der Empfänger (E) über den Wellenleiterkoppler (K) mit einem übertragungslichtwellenleiter verbindbar sind, **dadurch gekennzeichnet,** daß zur Erhöhung der optischen Nachbarkanalunterdrückung mindestens ein weiterer Wellenleiterkoppler (C) vorhanden ist, der als wellenlängenselektives Filter dient und zwischen dem Wellenleiterkoppler (K) und dem Empfänger (E) angeordnet ist.

2. Optischer Sende/Empfangsmodul nach Anspruch 1, dadurch gekennzeichnet, daß der Wellenleiterkoppler (K) und der weitere Wellenleiterkoppler (C) Monomodelichtwellenleiter-Verschmelzkoppler sind.

3. Optischer Sende/Empfangsmodul nach Anspruch 1, dadurch gekennzeichnet, daß der Wellenleiterkoppler (K) und der weitere Wellenleiterkoppler (C) in integrierter Optik realisiert sind.

4. Optischer Sende/Empfangsmodul nach einem der vorhergehenden Ansprüche, dadurch gekennzeichnet, daß zwischen dem Sender (S) und dem Wellenleiterkoppler (K) ein optischer Isolator (I) eingefügt ist, der die Polarisationsebene des Lichts dreht.

5. Optischer Sende/Empfangsmodul nach einem der vorhergehenden Ansprüche, dadurch gekennzeichnet, daß an dem freien Ende des Wellenleiterkopplers (K) oder an einem der freien Enden des Wellenleiterkopplers (C) eine Photodiode (P) zur Kontrolle und/oder Steuerung der Funktion des Senders (S) angeschlossen ist.

6. Optischer Sende/Empfangsmodul nach Anspruch 5, dadurch gekennzeichnet, daß die übrigen freien Enden der Wellenleiterkoppler (K, C) reflexionsfrei abgeschlossen sind.

7. Optischer Sende/Empfangsmodul nach einem der vorhergehenden Ansprüche, dadurch gekennzeichnet, daß er mittels eines Steckers (X) oder einer Spleißstelle mit dem Übertragungslichtwellenleiter verbindbar ist.

## Claims

1. Optical transceiver module comprising an optical transmitter (S) for transmitting a light beam of a first wavelength $\lambda_1$, an optical receiver (E) for receiving a light beam of a second wavelength $\lambda_2$, and a wavelength-selective waveguide coupler (K), the transmitter (S) and the receiver (E) being connectable via the waveguide coupler (K) to a transmission optical waveguide, **characterized in** that, in order to increase the optical adjacent-channel attenuation, at least one additional waveguide coupler (C) is provided which serves as a wavelength-selective filter and is interposed between the waveguide coupler (K) and the receiver (E).

2. An optical transceiver module as claimed in claim 1, characterized in that the waveguide coupler (K) and the additional waveguide coupler (C) are fused single-mode optical-fiber couplers.

3. An optical transceiver module as claimed in claim 1, characterized in that the waveguide coupler (K) and the additional waveguide coupler (C) are implemented in integrated optical technology.

4. An optical transceiver module as claimed in any one of the preceding claims, characterized in that an optical isolator (I) which rotates the plane of polarization of the light is interposed between the transmitter (S) and the waveguide coupler (K).

5. An optical transceiver module as claimed in any one of the preceding claims, characterized in that a photodiode (P) for checking and/or controlling the operation of the transmitter (S) is connected to the free end of the waveguide coupler (K) or to one of the free ends of the additional waveguide coupler (C).

6. An optical transceiver module as claimed in claim 5, characterized in that the other free ends of the waveguide couplers (K, C) are terminated by reflectionless terminations.

7. An optical transceiver module as claimed in any one of the preceding claims, characterized by being connectable to the transmission optical waveguide by means of a plug (X) or a splice.

## Revendications

1.- Module optique émetteur/récepteur comportant un émetteur optique (S) pour l'émission d'un rayonnement lumineux d'une première longueur d'onde (1), un récepteur optique (E) pour la réception d'un rayonnement lumineux d'une seconde longueur d'onde (2) et un coupleur à guide d'onde à sélection de longueurs d'onde (K), l'émetteur (S) et le récepteur (E) étant susceptibles d'être reliés via le coupleur à guide d'onde (K) à un guide d'onde lumineuse de transmission, caractérisé en ce qu'afin d'augmenter la suppression optique des canaux voisins, il est prévu au moins un autre coupleur à guide d'onde (C) qui sert de filtre sélecteur de longueurs d'onde et qui est disposé entre le coupleur à guide d'onde (K) et le récepteur (E).

2.- Module optique émetteur/récepteur selon la revendication 1, caractérisé en ce que le coupleur à guide d'onde (K) et l'autre coupleur à guide d'onde (C) sont des coupleurs à fusion à guide d'onde de lumière monomode.

3.- Module optique émetteur/récepteur selon la revendication 1, caractérisé en ce que le coupleur à guide d'onde (K) et l'autre coupleur à guide d'onde (C) sont réalisés en optique intégrée.

4.- Module optique émetteur/récepteur selon l'une des revendications précédentes, caractérisé en ce qu'entre l'émetteur (S) et le coupleur à guide d'onde (K), est inséré un isolateur optique (I) qui fait tourner le plan de polarisation de la lumière.

5.- Module optique émetteur/récepteur selon l'une des revendications précédentes, caractérisé en ce qu'à l'une des extrémités libres du coupleur à guide d'onde (K) ou à l'une des extrémités libres du coupleur à guide d'onde (C), est raccordée une photodiode (P) pour le controle et/ou la commande du fonctionnement de l'émetteur (S).

6.- Module optique émetteur/récepteur selon la revendication 5, caractérisé en ce que les autres extrémités libres des coupleurs à guide d'onde (K, C) sont obturés de façon ne permettant pas la réflexion.

7.- Module optique émetteur/récepteur selon l'une des revendications précédentes, caractérisé en ce qu'il est susceptible d'être relié à l'aide d'une fiche (X) ou d'une épissure au guide d'onde lumineuse de transmission.

Fig.1

Fig.2

Fig.3